(19) Europäisches Patentamt
European Patent Office
Office européen des brevets

(11) EP 4 440 023 A1

(12) **EUROPEAN PATENT APPLICATION**
published in accordance with Art. 153(4) EPC

(43) Date of publication:
**02.10.2024 Bulletin 2024/40**

(21) Application number: **22914593.3**

(22) Date of filing: **24.12.2022**

(51) International Patent Classification (IPC):
**H04L 5/00** (2006.01)

(52) Cooperative Patent Classification (CPC):
**H04L 5/00; H04W 52/02; H04W 72/23**

(86) International application number:
**PCT/CN2022/141708**

(87) International publication number:
**WO 2023/125339 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 CN 202111611531**

(71) Applicant: **Huawei Technologies Co., Ltd.**
**Shenzhen, Guangdong 518129 (CN)**

(72) Inventors:
• **CHEN, Weichao**
**Shenzhen, Guangdong 518129 (CN)**

• **QIN, Yi**
**Shenzhen, Guangdong 518129 (CN)**
• **DOU, Shengyue**
**Shenzhen, Guangdong 518129 (CN)**
• **CHEN, Erkai**
**Shenzhen, Guangdong 518129 (CN)**
• **CAO, Youlong**
**Shenzhen, Guangdong 518129 (CN)**
• **XU, Rui**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **REFERENCE SIGNAL TRANSMISSION METHOD AND APPARATUS**

(57) This application provides a reference signal RS transmission method and apparatus. The method includes: receiving configuration information from a network device. An RS is sent on an RS resource configured based on the configuration information. The RS resource is included in a plurality of RS resource groups, where an RS resource group i in the plurality of RS resource groups includes K first RS resources configured based on the configuration information, transmission moments of the K first RS resources are successively $T_{i,1}$, $T_{i,2}$, $\cdots$, $T_{i,K}$, an RS resource group (i+1) in the plurality of RS resource groups includes K second RS resources configured based on the configuration information, and transmission moments of the K second RS resources are successively $T_{i+1,1}$, $T_{i+1,2}$, $\cdots$, $T_{i+1,K}$, and satisfy: $T_{i,m+1} - T_{i,m} = P_m$, $T_{i+1,m+1} - T_{i+1,m} = P_m$, and $T_{i+1,k} - T_{i,k} = Q_i$. According to the method, the transmission apparatus may intensively report RSs before transmission of a service frame is completed. After the transmission of the service frame is completed, the transmission apparatus no longer sends a subsequent RS in a current periodicity, to achieve beneficial effects of power saving and resource saving.

FIG. 7

**Description**

**TECHNICAL FIELD**

This application relates to the field of communications technologies, and in particular, to a reference signal transmission method and apparatus.

**BACKGROUND**

In a wireless communication network, an extended reality (extended reality, XR) technology can provide brand-new visual experience for users by virtue of multi-view, strong interaction, and other advantages, and therefore has a great application value and great business potentiality. The XR technology covers virtual reality (virtual reality, VR), augmented reality (augmented reality, AR), mixed reality (mixed reality, MR), , and other technologies, which are widely applied to many fields such as entertainment, gaming, medical care, advertising, industry, online education, and engineering.

Although immersive services provided by the XR unprecedentedly improves user experience, a requirement for network transmission is very strict. High-definition video transmission requires a higher network throughput rate. In addition, real-time performance of video streams and user interaction behavior both impose stricter requirements on a network transmission delay. For example, in a cloud VR service, after a user terminal initiates a request to a cloud VR server, the cloud server delivers a video frame based on the request. After the terminal receives data of the video frame, the terminal presents a VR picture to the user.

Cloud XR is a quasi-periodic video streaming service. A video frame per second determines a video frame generation interval. However, although a value range of some reference signal (reference signal, RS) configuration periodicities is very wide, an XR service video frame delivery periodicity cannot be well adapted, which may cause problems such as inaccurate channel measurement and non-power saving of the terminal. Therefore, how to configure an appropriate periodicity for an RS in XR data transmission based on a service feature of an XR video streaming service, to achieve effect of saving power and resources becomes an urgent problem to be resolved.

**SUMMARY**

Embodiments of this application provide a reference signal transmission method and apparatus.

According to a first aspect, an embodiment of this application provides a reference signal sending method. The method may be performed by a terminal device, or may be performed by a component (for example, a processor, a chip, or a chip system) of the terminal device, or may be implemented by a logical module or software that can implement all or some functions of the terminal device. The method includes: receiving configuration information from a network device; and sending an RS on an RS resource configured based on the configuration information, where the RS resource is included in a plurality of RS resource groups, an RS resource group i in the plurality of RS resource groups includes K first RS resources configured based on the configuration information, transmission moments of the K first RS resources are successively $T_{i,1}$, $T_{i,2}$, $\cdots$, $T_{i,K}$, an RS resource group (i+1) in the plurality of RS resource groups includes K second RS resources configured based on the configuration information, and transmission moments of the K second RS resources are successively $T_{i+1,1}$, $T_{i+1,2}$, $\cdots$, $T_{i+1,K}$, and satisfy: $T_{i,m+1} - T_{i,m} = P_m$, $T_{i+1,m+1} - T_{i+1,m} = P_m$, and $T_{i+1,K} - T_{i,k} = Q_i$, where K is an integer greater than 1, i is an identifier of the RS resource group i, i+1 is an identifier of the RS resource group (i+1), i is a natural number and may start from 0 or may start from 1, m is an integer and satisfies $1 \leq m < K$, $k$ is an integer and satisfies $1 \leq k \leq K$, $P_m > 0$, and $Q_i > 0$. It may be understood that, in this embodiment of this application, the RS resource may be a sounding reference signal (sounding reference signal, SRS), or is applicable to another RS sent by the terminal. In this embodiment of this application, the SRS is used as an example for solution description. However, this solution is also applicable to another RS sent by the terminal. This is not limited herein.

According to the method, the RS sent on the RS resource configured based on the configuration information may well adapt to a service periodicity of the XR, and the RS is reported intensively before transmission of a video frame is completed, to help the network device obtain latest channel state information, so that a process, for example, antenna selection by the network device is facilitated, and transmission reliability is improved.

With reference to the first aspect, in some implementations of the first aspect, the RS resource is an SRS resource, and the configuration information includes SRS resource group information and is used to configure the SRS resource. For a case in which quantities of transmit and receive antennas are equal, it may be considered that a field SRS ResourceSet clustering is newly added to SRS-Config of the configuration information, to indicate SRS resource sets that belong to a same group. For a case in which quantities of transmit and receive antennas are unequal, it is considered that a field SRS Resource clustering is newly added, to indicate SRS resources that belong to a same group. Different from an SRS ResourceIdList field that includes only an SRS ResourceId in an SRS resource set, the SRS Resource clustering in the configuration information includes all SRS ResourceIds in the group. In this implementation, a plurality of SRS resources may be bound to one SRS resource group for intensive sending in one video frame periodicity, to help the network device obtain latest channel state information, so that a process, for example, antenna selection performed by the network device is facilitated, and transmission reliability is improved.

With reference to the first aspect, in some implementations of the first aspect, the receiving configuration information from a network device may be receiving radio resource control (radio resource control, RRC) layer signaling from the network device, and the configuration information is carried in a field newly added in the RRC signaling. For example, a field may be newly added to RRC signaling SRS-Config to configure SRS resource group information. The SRS resource group information is used to configure resources on which the terminal sends SRSs, and one SRS resource corresponds to sending of one SRS. In this implementation, the terminal may configure the RS resource group based on the configuration information, so that the terminal performs intensive sending on all RS resources in the RS resource group, to help the network device obtain latest channel state information, so that the process, for example, the antenna selection performed by the network device is facilitated, and the transmission reliability is improved.

Optionally, the configuration information is further used to configure a quantity of first RS resources in the RS resource group as K. In an implementation, the network device configures the quantity K of first RS resources in the RS resource group based on a subcarrier spacing (subcarrier spacing, SCS), a frame structure, and a time jitter (jitter) range. In this implementation, the terminal may configure a sending density of resources of an RS resource group, so that the terminal can flexibly adapt to different XR services, and the network device can obtain latest channel state information, so that the process, for example, the antenna selection performed by the network device is facilitated, and the transmission reliability is improved.

Optionally, the configuration information is further used to configure a transmission interval between adjacent RS resource groups in time domain (for example, a transmission interval $Q_i$ between the RS resource group i+1 and the RS resource group i+1). In an implementation, the network device configures the transmission interval between the adjacent RS resource groups in time domain based on the SCS and the frame structure. Optionally, the transmission interval $Q_i$ may be obtained by the network device from a chart, or may be obtained according to a given mathematical formula that is satisfied. This is not limited in this application. In this implementation, the terminal may configure the transmission interval between the adjacent RS resource groups in time domain, so that the terminal can flexibly adapt to different XR services, and the network device can obtain latest channel state information, so that the process, for example, the antenna selection performed by the network device is facilitated, and the transmission reliability is improved.

Optionally, the configuration information is further used to configure a transmission interval $P_m$ between adjacent RS resources in an RS resource group in time domain, and a value of $P_m$ may be determined based on a specific slot pattern. In this implementation, the terminal may configure a transmission interval between adjacent RS resources in time domain, so that the terminal can flexibly adapt to different slot patterns, and the network device can obtain latest channel state information, so that the process, for example, the antenna selection performed by the network device is facilitated, and the transmission reliability is improved.

With reference to the first aspect, in some implementations of the first aspect, the terminal receives indication information from the network device, where the indication information indicates to skip sending an RS on a remaining RS resource in a current RS resource group. In this implementation, after transmission of the video frame is completed, the terminal no longer sends the RS on the remaining RS resource in the current RS resource group. This achieves beneficial effects of power saving and resource saving.

With reference to the first aspect, in an implementation of the first aspect in which the terminal receives the indication information from the network device, the indication information is carried in media access control control element (media access control control element, MAC CE) signaling. For example, the terminal sends SRSs on all SRS resources in an SRS resource group based on the configuration information. After the network device completes receiving of a current video frame, the network device sends MAC CE signaling to the terminal, and skips sending an SRS on a remaining SRS resource in the current SRS resource group. Optionally, based on the configuration information, both the terminal and the network device already know sending moments corresponding to all the SRS resources in the current SRS resource group. Therefore, the SRS resources in the current SRS resource group are only deactivated based on the MAC CE. It may be understood that a deactivation command does not take effect on an SRS resource group in a next video frame arrival periodicity. In this implementation, the terminal may obtain the indication information by using the MAC CE signaling, and no longer send the RS on the remaining RS resource in the current RS resource group based on the indication information, to achieve beneficial effects of power saving and resource saving.

With reference to the first aspect, in an embodiment in which the configuration information is further used to configure the transmission interval between the adj acent RS resource groups in time domain according to the first aspect, the transmission interval is obtained by using a mathematical condition that is satisfied, that is, $Q_i$=15 ms or 17.5 ms and $\sum_{n=i}^{i+2} Q_n = 50\ ms$ is satisfied, where i≤n≤i+2. In this implementation, an appropriate RS resource group may be configured for an XR service whose video frame per second is 60 Hz and whose transmission subcarrier spacing is 30 kHz, to help the network device obtain latest channel state information, so that the process, for example, the antenna selection performed by the network device is facilitated, and the transmission reliability is improved.

With reference to the first aspect, in an embodiment in which the configuration information is further used to configure the transmission interval between the adj acent RS resource groups in time domain according to the first aspect, the transmission interval is obtained by using a mathematical condition that is satisfied, that is, $Q_i$=10 ms or 7.5 ms and $\sum_{n=i}^{i+5} Q_n = 50\ ms$ is satisfied, where i≤n≤i+5. In this implementation, an appropriate RS resource group may be configured for an XR service whose video frame per second is 120 Hz and whose transmission subcarrier spacing is 30 kHz, to help the network device obtain the latest channel state information, so that the process, for example, the antenna selection performed by the network device is facilitated, and the transmission reliability is improved.

With reference to the first aspect, in an embodiment in which the configuration information is further used to configure the transmission interval between the adj acent RS resource groups in time domain according to the first aspect, the transmission interval is obtained by using a mathematical condition that is satisfied, that is, $Q_i$=10 ms or 12.5 ms and $\sum_{n=i}^{i+8} Q_n = 100\ ms$ is satisfied, where i≤n≤i+8. In this implementation, an appropriate RS resource group may be configured for an XR service whose video frame per second is 90 Hz and whose transmission subcarrier spacing is 30 kHz, to help the network device obtain the latest channel state information, so that the process, for example, the antenna selection performed by the network device is facilitated, and the transmission reliability is improved.

With reference to the first aspect, in an embodiment in which the configuration information is further used to configure the transmission interval between the adj acent RS resource groups in time domain according to the first aspect, the transmission interval is obtained by using a mathematical condition that is satisfied, that is, $Q_i$=15 ms or 20 ms and $\sum_{n=i}^{i+2} Q_n = 50\ ms$ is satisfied, where i≤n≤i+2. In this implementation, an appropriate RS resource group may be configured for an XR service whose video frame per second is 60 Hz and whose transmission subcarrier spacing is 15 kHz, to help the network device obtain the latest channel state information, so that the process, for example, the antenna selection performed by the network device is facilitated, and the transmission reliability is improved.

According to a second aspect, an embodiment of this application provides a reference signal sending method. The method may be performed by a radio access network device, or may be performed by a component (for example, a processor, a chip, or a chip system) of the radio access network device, or may be implemented by a logical module or software that can implement all or some functions of the radio access network device. The method includes: sending configuration information to a terminal; and receiving an RS on an RS resource configured based on the configuration information, where the RS resource is included in a plurality of RS resource groups, an RS resource group i in the plurality of RS resource groups includes K first RS resources configured based on the configuration information, transmission moments of the K first RS resources are successively $T_{i,1}$, $T_{i,2}$, ⋯, $T_{i,K}$, an RS resource group (i+1) in the plurality of RS resource groups includes K second RS resources configured based on the configuration information, and transmission moments of the K second RS resources are successively $T_{i+1,1}$, $T_{i+1,2}$, ⋯, $T_{i+1,K}$, and satisfy: $T_{i,m}$+1- $T_{i,m}$ = $P_m$, $T_{i+1,m+1}$- $T_{i+1,m}$ = $P_m$, and $T_{i+1,k}$- $T_{i,k}$ = $Q_i$, where K is an integer greater than 1, i is an identifier of the RS resource group i, i+1 is an identifier of the RS resource group (i+1), i is a natural number and may start from 0 or may start from 1, m is an integer and satisfies $1 \le m < K$, k is an integer and satisfies $1 \le k \le$ K, $P_m > 0$, and $Q_i > 0$. It may be understood that, in this embodiment of this application, the RS resource may be a sounding reference signal (sounding reference signal, SRS), or is applicable to another RS sent by the terminal. In this embodiment of this application, the SRS is used as an example for solution description. However, this solution is also applicable to another RS sent by the terminal. This is not limited herein.

According to the method, the RS received on the RS resource configured based on the configuration information may well adapt to a service periodicity of XR, and the RS is reported intensively before transmission of a video frame is completed, to help the network device obtain latest channel state information, so that a process, for example, antenna selection by the network device is facilitated, and transmission reliability is improved.

With reference to the second aspect, in some implementations of the second aspect, the RS resource is an SRS resource, and the configuration information includes SRS resource group information and is used to configure the SRS resource. For a case in which quantities of transmit and receive antennas are equal, it may be considered that a field SRS ResourceSet clustering is newly added to SRS-Config of the configuration information, to indicate SRS resource sets that belong to a same group. For a case in which quantities of transmit and receive antennas are unequal, it is considered that a field SRS Resource clustering is newly added, to indicate SRS resources that belong to a same group. Different from an SRS ResourceIdList field that includes only an SRS ResourceId in an SRS resource set, the SRS Resource clustering in the configuration information includes all SRS ResourceIds in the group. In this implementation, a plurality of SRS resources may be bound to one SRS resource group for intensive sending in one video frame periodicity, to help the network device obtain latest channel state information, so that a process, for example, antenna selection performed by the network device is facilitated, and transmission reliability is improved.

With reference to the second aspect, in some implementations of the second aspect, the sending the configuration information to a terminal may be sending radio resource control (radio resource control, RRC) layer signaling to the terminal, and the configuration information is carried in a field newly added in the RRC signaling. For example, a field may be newly added to RRC signaling SRS-Config to configure the SRS resource group information. The SRS resource group information is used to configure resources on which the terminal sends SRSs, and one SRS resource corresponds to sending of one SRS. In this implementation, the terminal may configure the RS resource group based on the configuration information, so that the terminal performs intensive sending on all RS resources in the RS resource group, to help the network device obtain latest channel state information, so that the process, for example, the antenna selection performed by the network device is facilitated, and the transmission reliability is improved.

Optionally, the configuration information is further used to configure a quantity of first RS resources in the RS resource group as K. In an implementation, the network device configures the quantity K of first RS resources in the RS resource group based on a subcarrier spacing (subcarrier spacing, SCS), a frame structure, and a time jitter (jitter) range. In this implementation, the terminal may configure a sending density of resources of an RS resource group, so that the terminal can flexibly adapt to different XR services, and the network device can obtain latest channel state information, so that the process, for example, the antenna selection performed by the network device is facilitated, and the transmission reliability is improved.

Optionally, the configuration information is further used to configure a transmission interval between adjacent RS resource groups in time domain (for example, a transmission interval $Q_i$ between the RS resource group i+1 and the RS resource group i). In an implementation, the network device configures the transmission interval between the adjacent RS resource groups in time domain based on the SCS and the frame structure. Optionally, the transmission interval $Q_i$ may be obtained by the network device in a table, or may be obtained by using a given mathematical formula that is satisfied. This is not limited in this application. In this implementation, the terminal may configure the transmission interval between the adjacent RS resource groups in time domain, so that the terminal can flexibly adapt to different XR services, and the network device can obtain latest channel state information, so that the process, for example, the antenna selection performed by the network device is facilitated, and the transmission reliability is improved.

Optionally, the configuration information is further used to configure a transmission interval $P_m$ between adjacent RS resources in an RS resource group in time domain, and a value of $P_m$ may be determined based on a specific slot pattern. In this implementation, the terminal may configure a transmission interval between adjacent RS resources in time domain, so that the terminal can flexibly adapt to different slot patterns, and the network device can obtain latest channel state information, so that the process, for example, the antenna selection performed by the network device is facilitated, and the transmission reliability is improved.

With reference to the second aspect, in some implementations of the second aspect, the network device sends indication information to the terminal, where the indication information indicates to skip sending an RS on a remaining RS resource in a current RS resource group. In this implementation, after transmission of a video frame is completed, the terminal no longer sends the RS on the remaining RS resource in the current RS resource group. This achieves beneficial effects of power saving and resource saving.

With reference to the second aspect, in an implementation of the second aspect in which the network device sends the indication information to the terminal, the indication information is carried in media access control (media access control element, MAC CE) signaling. For example, the terminal sends SRSs on all SRS resources in an SRS resource group based on the configuration information. After the network device completes receiving of a current video frame, the network device sends MAC CE signaling to the terminal, and skips sending an SRS on a remaining SRS resource in the current SRS resource group. Optionally, based on the configuration information, both the terminal and the network device already know sending moments of all the SRS resources in the current SRS resource group. Therefore, the SRS resources in the current SRS resource group are only deactivated based on the MAC CE. It may be understood that a deactivation command does not take effect on an SRS resource group in a next video frame arrival periodicity. In this implementation, the terminal may obtain the indication information by using the MAC CE signaling, and no longer send the RS on the remaining RS resource in the current RS resource group based on the indication information, to achieve beneficial effects of power saving and resource saving.

With reference to the second aspect, in an embodiment in which the configuration information is further used to configure the transmission interval between the adj acent RS resource groups in time domain according to the second aspect, the transmission interval is obtained by using a mathematical condition that is satisfied, that is, $Q_i$=15 ms or 17.5 ms and $\sum_{n=i}^{i+2} Q_n = 50$ *ms* is satisfied, where i≤n≤i+2. In this implementation, an appropriate RS resource group may be configured for an XR service whose video frame per second is 60 Hz and whose transmission subcarrier spacing is 30 kHz, to help the network device obtain latest channel state information, so that the process, for example, the antenna selection performed by the network device is facilitated, and the transmission reliability is improved.

With reference to the second aspect, in an embodiment in which the configuration information is further used to configure the transmission interval between the adj acent RS resource groups in time domain according to the second aspect, the transmission interval is obtained by using a mathematical condition that is satisfied, that is, $Q_i$=10 ms or 7.5 ms and $\sum_{n=i}^{i+5} Q_n =$ 50 *ms* is satisfied, where i≤n≤i+5. In this implementation, an appropriate RS resource group may be configured for an XR service whose video frame per second is 120 Hz and whose transmission subcarrier spacing is 30 kHz, to help the network device obtain the latest channel state information, so that the process, for example, the antenna selection performed by the network device is facilitated, and the transmission reliability is improved.

With reference to the second aspect, in an embodiment in which the configuration information is further used to configure the transmission interval between the adj acent RS resource groups in time domain according to the second aspect, the transmission interval is obtained by using a mathematical condition that is satisfied, that is, $Q_i$=10 ms or 12.5 ms and $\sum_{n=i}^{i+8} Q_n =$ 100 *ms* is satisfied, where i≤n≤i+8. In this implementation, an appropriate RS resource group may be configured for an XR service whose video frame per second is 90 Hz and whose transmission subcarrier spacing is 30 kHz, to help the network device obtain the latest channel state information, so that the process, for example, the antenna selection performed by the network device is facilitated, and the transmission reliability is improved.

With reference to the second aspect, in an embodiment in which the configuration information is further used to configure the transmission interval between the adj acent RS resource groups in time domain according to the second aspect, the transmission interval is obtained by using a mathematical condition that is satisfied, that is, $Q_i$=15 ms or 20 ms and $\sum_{n=i}^{i+2} Q_n = 50\ ms$ is satisfied, where i≤n≤i+2. In this implementation, an appropriate RS resource group may be configured for an XR service whose video frame per second is 60 Hz and whose transmission subcarrier spacing is 15 kHz, to help the network device obtain the latest channel state information, so that the process, for example, the antenna selection performed by the network device is facilitated, and the transmission reliability is improved.

According to a third aspect, an embodiment of this application provides an apparatus. The apparatus may implement the method in any one of the first aspect or the possible implementations of the first aspect. The apparatus includes a corresponding unit or component configured to perform the foregoing method. The unit included in the apparatus may be implemented in a software and/or hardware manner. The apparatus may be, for example, a terminal or a network device, or may be a chip, a chip system, a processor, or the like that supports the terminal or the network device in implementing the foregoing method.

According to a fourth aspect, an embodiment of this application provides an apparatus. The apparatus may implement the method in any one of the second aspect or the possible implementations of the second aspect. The apparatus includes a corresponding unit or component configured to perform the foregoing method. The unit included in the apparatus may be implemented in a software and/or hardware manner. The apparatus may be, for example, a terminal or a network device, or may be a chip, a chip system, a processor, or the like that supports the terminal or the network device in implementing the foregoing method.

According to a fifth aspect, an embodiment of this application provides an apparatus. The apparatus includes: a processor, where the processor is coupled to a memory, the memory is configured to store a program or instructions, and when the program or the instructions are executed by the processor, the apparatus is enabled to implement the method in any one of the first aspect or the possible implementations of the first aspect.

According to a sixth aspect, an embodiment of this application provides an apparatus. The apparatus includes: a processor, where the processor is coupled to a memory, the memory is configured to store a program or instructions, and when the program or the instructions are executed by the processor, the apparatus is enabled to implement the method in any one of the second aspect or the possible implementations of the second aspect.

According to a seventh aspect, an embodiment of this application provides a computer-readable storage medium. The computer-readable storage medium stores a computer program or instructions, and when the computer program or the instructions are executed, a computer is enabled to perform the method in any one of the first aspect or the possible implementations of the first aspect.

According to an eighth aspect, an embodiment of this application provides a computer-readable storage medium. The computer-readable storage medium stores a computer program or instructions, and when the computer program or the instructions are executed, a computer is enabled to perform the method in any one of the second aspect or the possible implementations of the second aspect.

According to a ninth aspect, an embodiment of this application provides a computer program product, including computer program code. When the computer program code is run on a computer, the computer is enabled to perform the method in any one of the first aspect or the possible implementations of the first aspect.

According to a tenth aspect, an embodiment of this application provides a computer program product, including computer program code. When the computer program code is run on a computer, the computer is enabled to perform the method in any one of the second aspect or the possible implementations of the second aspect.

According to an eleventh aspect, an embodiment of this application provides a chip. The chip includes: a processor, where the processor is coupled to a memory, the memory is configured to store a program or instructions, and when the program or the instructions are executed by the processor, the chip is enabled to implement the method in any one of the first aspect or the possible implementations of the first aspect.

According to a twelfth aspect, an embodiment of this application provides a chip. The chip includes: a processor, where the processor is coupled to a memory, the memory is configured to store a program or instructions, and when the program or the instructions are executed by the processor, the chip is enabled to implement the method in any one of the second aspect or the possible implementations of the second aspect.

According to a thirteenth aspect, an embodiment of this application provides a communication system, including: the apparatus according to the third aspect and the apparatus according to the fourth aspect.

According to a fourteenth aspect, an embodiment of this application provides a communication system, including: the apparatus according to the fifth aspect and the apparatus according to the sixth aspect.

It may be understood that, for beneficial effects of the third aspect to the fourteenth aspect and the features corresponding to the first aspect or the second aspect, refer to related descriptions in the first aspect or the second aspect. Details are not described herein again.

## BRIEF DESCRIPTION OF DRAWINGS

FIG. 1 is a diagram of a communication system to which embodiments are applied according to this application;
FIG. 2 is a diagram of an example of an architecture of a communication system;
FIG. 3 is a diagram of transmission of a data packet in a video frame;
FIG. 4 to FIG. 6 are diagrams of several system frameworks to which an embodiment of this application is applicable;
FIG. 7 is a schematic flowchart of a communication method according to an embodiment of this application;
FIG. 8 is a schematic flowchart of a communication method according to an embodiment of this application;
FIG. 9 is a diagram of a structure of a communication apparatus according to an embodiment of this application;
FIG. 10 is a diagram of a structure of a terminal according to an embodiment of this application; and
FIG. 11 is a diagram of another communication apparatus according to an embodiment of this application.

## DESCRIPTION OF EMBODIMENTS

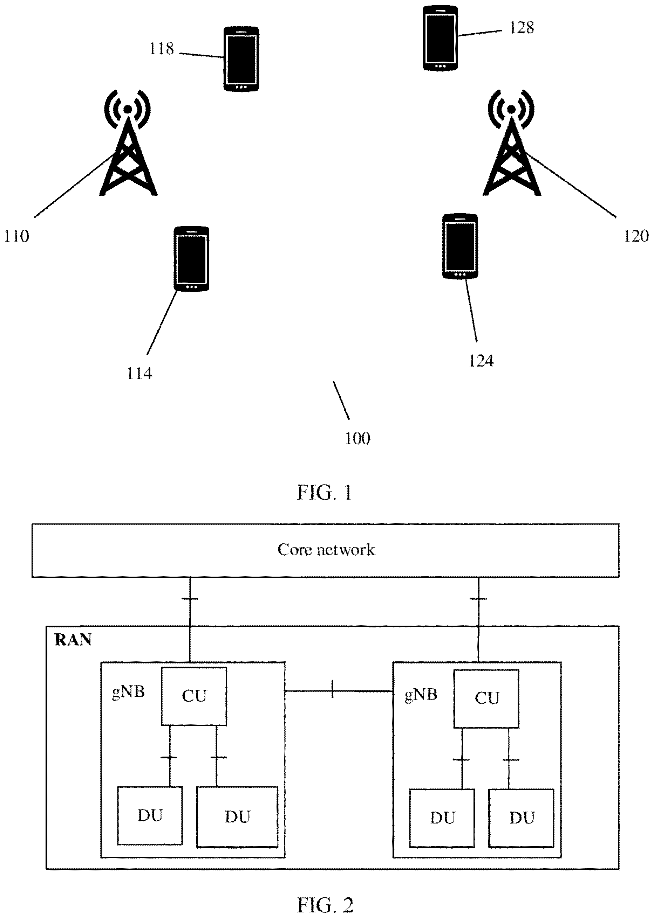

A method and an apparatus provided in embodiments of this application may be applied to a communication system. FIG. 1 is a diagram of a structure of a communication system. The communication system 100 includes one or more network devices (a network device 110 and a network device 120 shown in the figure), and one or more terminals that communicate with the one or more network devices. A terminal 114 and a terminal 118 shown in FIG. 1 communicate with the network device 110, and a terminal 124 and a terminal 128 shown in FIG. 1 communicate with the network device 120. It may be understood that the network device and the terminal may also be referred to as communication devices.

Technologies described in embodiments of the present invention may be applied to various communication systems, for example, a 4th generation (4th generation, 4G) communication system, a 4.5G communication system, a 5G communication system, a system converged by a plurality of communication systems, and a future evolved communication system (for example, a 6G communication system). For example, the communication system may be a long term evolution (long term evolution, LTE) system, a new radio (new radio, NR) system, a wireless fidelity (wireless fidelity, Wi-Fi) system, a wireless self-organizing system, a device-to-device direct communication system, a communication system related to the 3rd Generation Partnership Project (3rd generation partnership project, 3GPP), and another communication system of this type.

FIG. 2 is a diagram of an example of a possible architecture of a communication system. As shown in FIG. 2, a network device in a radio access network (radio access network, RAN) includes a base station (for example, a gNodeB or a gNB) in an architecture in which a central unit (central unit, CU) and a distribution unit (distributed unit, DU) are separated. The RAN may be connected to a core network (for example, the core network may be an LTE core network or a 5G core network). It may be understood that the base station is divided into the CU and the DU from the perspective of a logical function. The CU and the DU may be physically separated or deployed together. A plurality of DUs may share one CU. One DU may alternatively be connected to a plurality of CUs (not shown in the figure). The CU and the DU may be connected through an interface, for example, an F1 interface. The CU and the DU may be divided based on a protocol layer of a wireless network. For example, functions of a packet data convergence protocol (packet data convergence protocol, PDCP) layer and a radio resource control (radio resource control, RRC) layer are set on the CU, but functions of a radio link control (radio link control, RLC) layer, a media access control (media access control, MAC) layer, and a physical (physical) layer are set on the DU. It may be understood that, division into processing functions of the CU and the DU based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and functions of a protocol layer above the RLC layer are set on the CU, and remaining functions of the RLC layer and functions of a protocol layer below the RLC layer are set on the DU. In another design, functions of the CU or the DU may alternatively be obtained through division based on a service type or another system requirement. For example, division is performed based on a latency, a function whose processing time needs to satisfy a latency requirement is set on the DU, and a function whose processing time does not need to satisfy the latency requirement is set on the CU. A network architecture shown in FIG. 2 may be used in a 5G communication system, or may share one or more components or resources with an LTE system. In another design, the CU may alternatively have one or more functions of a core network. One or more CUs may be set in a centralized manner or a split manner. For example, the CUs may be disposed on a network side for ease of centralized management. The DU may have a plurality of radio frequency functions, or the radio frequency functions may be set remotely.

The function of the CU may be implemented by one entity, or a control plane (CP) and a user plane (UP) may be further separated. To be specific, the control plane of the CU (CU-CP) and the user plane of the CU (CU-UP) may be implemented by different functional entities, and the CU-CP and the CU-UP may be coupled to the DU to jointly implement a function of a base station.

It may be understood that embodiments provided in this application are also applicable to an architecture in which the CU and the DU are not separated.

In this application, the network device may be any device having a wireless transceiver function. The network device includes but is not limited to: an evolved NodeB (NodeB or eNB or e-NodeB, evolved NodeB) in LTE, a gNodeB (gNodeB or gNB) or a transmission reception point (transmission reception point, TRP) in NR, a subsequently evolved base station in 3GPP, an access node in a Wi-Fi system, a wireless relay node, a wireless backhaul node, a core network device, or the like. The base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. Alternatively, the network device may be a server (for example, a cloud server), a radio controller in a cloud radio access network (cloud radio access network, CRAN) scenario, a CU, and/or a DU. Alternatively, the network device may be a server, a wearable device, a machine-to-machine communication device, a vehicle-mounted device, a smart screen, or the like. The following uses an example in which the network device is the base station for description. A plurality of network devices may be base stations of a same type, or may be base stations of different types. The base station may communicate with the terminal device, or may communicate with the terminal device through a relay station. The terminal device may communicate with a plurality of base stations using different technologies. For example, the terminal device may communicate with a base station supporting an LTE network, or may communicate with a base station supporting a 5G network, and may further support dual connections to a base station in an LTE network and a base station supporting a 5G network. It may be understood that all or some functions of the network device in this application may alternatively be implemented by using a software function running on hardware, or may be implemented by using an instantiated virtualization function on a platform (for example, a cloud platform).

The terminal is a device having a wireless transceiver function. The terminal may be deployed on land, including indoors or outdoors, or may be handheld, wearable, or vehicle-mounted; may be deployed on a water surface (for example, on a ship); or may be deployed in the air (for example, on an airplane, a balloon, or a satellite). The terminal may be a mobile phone (mobile phone), a tablet computer (Pad), a computer with a wireless transceiver function, a VR terminal device, an AR terminal device, an MR terminal device, a terminal in industrial control (industrial control), an in-vehicle terminal device, a terminal in self-driving (self-driving), a terminal in assisted driving, a terminal in remote medical (remote medical), a terminal in a smart grid (smart grid), a terminal in transportation safety (transportation safety), a terminal in a smart city (smart city), or a terminal in a smart home (smart home), or the like. An application scenario is not limited in embodiments of this application. The terminal sometimes may also be referred to as a terminal device, user equipment (user equipment, UE), an access terminal device, a vehicle-mounted terminal, an industrial control terminal, a UE unit, a UE station, a mobile station, a remote station, a remote terminal device, a mobile device, a UE terminal device, a wireless communication device, a machine terminal, a UE agent, a UE apparatus, or the like. The terminal may be fixed or mobile.

By way of an example rather than limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices, such as various smart bands or smart jewelry for monitoring physical signs, that are dedicated to only one type of application function and that need to work with other devices such as smartphones.

In this application, the terminal may be a terminal in an internet of things (internet of things, IoT) system. IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC). The terminal in this application may be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the method in this application. Therefore, embodiments of this application may be applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

Alternatively, the terminal in this application may be a VR terminal, an AR terminal, or an MR terminal. The VR terminal, the AR terminal, and the MR terminal each may be referred to as an XR terminal. The XR terminal may be, for example, a head mounted device (for example, a helmet or glasses), may be an all-in-one machine, or may be a television, a display, a car, a vehicle-mounted device, a tablet, or a smart screen. The XR terminal can present XR data to a user, and the user can experience diversified XR services by wearing or using the XR terminal. The XR terminal may access a network in a wireless or wired manner, for example, access a network through a Wi-Fi or 5G system.

A VR technology mainly refers to rendering of visual and audio scenarios to simulate sensory stimulation of vision and audio in real world to a user as much as possible. In the VR technology, the user may wear an XR terminal (for example, a head-mounted device) to simulate a visual sense and/or an auditory sense to the user. The VR technology may further perform action tracking on the user, to update simulated visual and/or auditory content in a timely manner. The AR technology is mainly to provide additional visual and/or auditory information or manually generated content in a real environment perceived by the user. The user may directly (where for example, sensing, processing, and rendering is not performed) or indirectly (where for example, transferring is performed through a sensor or the like) perceive the real environment, and further enhancement processing is performed. The MR technology is to insert some virtual elements into a physical scenario, to provide immersive experience for the user by using these elements as a part of a real scenario. The network device may process and transmit data (which may be referred to as XR data) generated by an XR service. For example, a network device in a cloud may render and encode (for example, perform source encoding on) XR source data, and transmit the XR data to an XR terminal via a network device in a core network and/or an access network. The XR terminal provides diversified XR experience (for example, immersive experience, visual experience, interaction experience, or device experience) for the user by processing the XR data. The XR experience is evaluated in a plurality of different dimensions, for example, including one or more of the following dimensions: image definition, image smoothness, image distortion, image stereoscopy, image black borders, image smearing, sound quality, sound effect, angle of view, freezing, artifacts, dizziness, audio and video synchronization, interaction freedom, interaction operation response speed, interaction operation precision, interaction content loading speed, terminal wearing comfort, terminal wearing fatigue, terminal battery life, terminal portability, terminal visual impairment friendliness, or the like.

For transmission of a video-type service such as XR, a picture frame or a picture frame slice or segment may be sent to a terminal in a form of a data packet. For example, the picture frame or the picture frame slice or segment is encapsulated into internet protocol (internet protocol, IP) packets at a network transport layer and transmitted to a fixed network/core network, and then the IP data packets are transmitted to the terminal through a wireless air interface. It may be understood that the picture frame in this application may also be referred to as a video frame or a data frame.

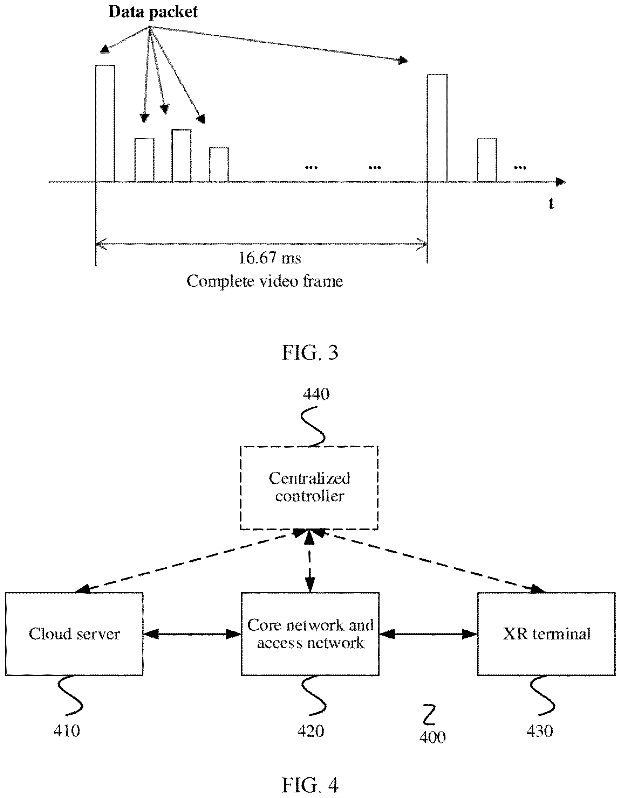

Although an immersive service provided by the XR unprecedentedly improves user experience, a requirement for network transmission is very strict. High-definition video transmission requires a higher network throughput rate. In addition, real-time performance of video streams and user interaction behavior both impose stricter requirements on a network transmission delay. For example, in a cloud VR service, after a user terminal initiates a request to a cloud VR server, the cloud server delivers a video frame based on the request. After the terminal receives data of the video frame, the terminal presents a VR picture to a user. Cloud XR is a quasi-periodic video streaming service. A video frame per second determines a video frame generation interval. For example, when a frame per second (frame per second, FPS) is 60 Hz, the server generates a video frame every 1/60=16.67 ms and delivers the video frame to a network for transmission, and the video frame finally reaches a user. Because each video frame generated by the server is usually large, each video frame is divided into several data packets for transmission and scheduling in a network, as shown in FIG. 3.

To establish an efficient communication link between the network device and the terminal, the network device configures a time-frequency resource for monitoring a signal (for example, a sounding reference signal), and then estimates uplink channel quality of different frequency bands based on a measurement result of a sounding reference signal (sounding reference signal, SRS) or channel-state information-reference signal (channel-state information-reference signal, CSI-RS) sent by the terminal. When it is assumed that an uplink/downlink channel is reciprocal (for example, in a time division duplex (TDD) mode), by using channel symmetry, the network device may estimate downlink channel quality by using the SRS sent by the terminal, or may estimate the downlink channel quality by sending a CSI-RS to the terminal, so that the network device is assisted in making a better downlink transmission policy. Both LTE and NR support an SRS. In addition to evaluating uplink/downlink quality by using the SRS, the network device may further perform beam management by using the SRS, including beam training, switching, and the like. It may be understood that in embodiments of this application, the SRS is used as an example for solution description. However, this solution is also applicable to the CSI-RS. This is not limited herein.

Configurations of an SRS resource set type may be mainly classified into three types: periodic, semi-persistent, and aperiodic. All SRS resources in an identical SRS resource set are to have same time domain characteristics. Parameters of the three types of SRSs can be configured by using RRC signaling. A semi-persistent SRS can be activated and deactivated by using media access control element (media access control element, MAC CE) signaling. An aperiodic SRS can also be triggered by using downlink control information (downlink control information, DCI). In embodiments of this application, a configuration of a periodic SRS is mainly considered, and a range of an SRS configuration periodicity is generally 1 to 81920 slots (slots). Although a value range of the SRS configuration periodicity is very wide, the SRS configuration periodicity cannot well adapt to an XR service video frame delivery periodicity, which may cause problems such as inaccurate channel measurement and non-power saving of the terminal. For example, in an actual XR service, a video frame (video frame) does not arrive at the network device strictly based on a specified FPS periodicity, and actual time of arrival of the video frame (video frame) has a jitter (jitter) to a specific extent. Therefore, if the video frame arrives late, SRS information that is advanced is outdated; or if the video frame arrives early or transmission of the video frame has already been completed, subsequent SRS information does not need to be sent. In addition, an SRS sending periodicity cannot adapt to the video frame delivery periodicity. For a small video frame periodicity, frequent sending is not conducive to power saving of the terminal. For a large video frame periodicity, a problem that earlier SRS information is outdated also exists. Although a video frame periodicity configuration policy is adaptively adjusted based on factors such as system resource usage and terminal capabilities, the video frame periodicity configuration policy cannot adapt to the video frame periodicity delivery periodicity. Therefore, how to configure an appropriate periodicity for an RS in XR data transmission based on a service feature of an XR video streaming service, to achieve effect of saving power and resources becomes an urgent problem to be resolved.

An embodiment of this application provides a reference signal (for example, an SRS or a CSI-RS) transmission method for XR data. In this method, to better ensure a low-latency and high-throughput XR service, the terminal needs to send SRS information or CSI-RS measurement information at a closest time point before delivering the video frame or in a process of delivering the video frame (in this case, reflected channel information is most accurate), so that the network device decides resource allocation, beam management, or antenna selection based on the SRS information or the CSI-RS measurement information. In addition, if sending of a current video frame has already been completed, in a period of time before a next video frame arrives, from a perspective of power saving and resource saving of the terminal, the terminal does not need to send an SRS again or the network device does not need to send a CSI-RS again.

The following describes the technical solutions of this application in detail by using specific embodiments with reference to the accompanying drawings. The following embodiments and implementations may be combined with each other, and same or similar concepts or processes may not be described again in some embodiments. It should be understood that a function explained in this application may be implemented by using an independent hardware circuit, software running in combination with a processor/microprocessor or a general-purpose computer, an application-specific integrated circuit, and/or one or more digital signal processors. When described as a method, this application may alternatively be implemented in a computer processor and a memory coupled to the processor.

For ease of understanding of embodiments of this application, some concepts or terms used in this application are first briefly described.

1. RS resource group

RS-related resources are configured in a dedicated bandwidth part (BWP), and are configured at two levels: an RS resource set (Resource Set) and an RS resource (Resource). One RS resource group includes one or more RS resource sets, and each resource set may further include one or more RS resources. An SRS resource is used as an example. A quantity relationship between an SRS resource set and an SRS resource in a case in which quantities of transmit and receive antennas are equal or unequal is as follows.

- When the quantities of transmit and receive antennas are equal (1T1R, 2T2R, 4T4R, where XTYR indicates configurations of X transmit antennas and Y receive antennas), a maximum of two SRS resource sets can be configured, and each resource set contains one SRS resource.
- When the quantities of transmit and receive antennas are unequal, each SRS resource set includes two SRS resources in a case of 1T2R or 2T4R, and each SRS resource set includes four SRS resources in a case of 1T4R.

It may be understood that, in embodiments of this application, the RS resource may alternatively be a CSI-RS. In the present invention, an SRS signal is used as an example for solution description. However, this solution is also applicable to a CSI-RS signal. This is not limited herein.

2. Slot pattern

A terminal sends RS information or RS measurement information based on a scheme and a resource configured by a network device. Therefore, the RS information or the RS measurement information needs to be sent in an uplink slot (slot). That a frame structure is a slot pattern DDDSU, which is common currently, is used as an example. D represents a downlink-only slot, S represents a self-contained slot, and U represents an uplink-only slot. The S slot includes two structures: a downlink-dominant slot (DL-dominant slot) and an uplink-dominant slot (UL-dominant slot). Most symbols in the DL-dominant slot are used for downlink data transmission, and few symbols are used for uplink control signal transmission or SRS signal transmission. Most symbols in the UL-dominant slot are used for uplink data transmission, and few symbols are used for downlink control signal transmission. Therefore, when the slot S is the DL-dominant slot, the terminal can send an SRS in the slot S or the slot U. It may be understood that embodiments of this application are explained and described based on that the frame structure is the DDDSU slot pattern. However, embodiments of this application are also applicable to another type of frame structure slot pattern. This is not limited herein.

3. Cloud extended reality (Cloud XR)

The cloud XR (which may also be referred to as cloudification of XR) means that technologies such as cloud computing and cloud rendering are introduced into an application of an XR service, and a display output, a sound output, and the like of a cloud are encoded and compressed and then transmitted to an XR terminal via a network.

Embodiments provided in this application are applicable to a plurality of different scenarios. FIG. 4 to FIG. 6 are diagrams of several system frameworks to which an embodiment of this application is applicable.

FIG. 4 is a diagram of a system network element to which an embodiment of this application is applicable. FIG. 4 shows a system 400, including a cloud server 410, a core network and access network 420 (which may be referred to as a transmission network 420 for short, for example, an LTE network, a 5G network, or a 6G network), and an XR terminal 430. The cloud server 410 may be configured to encode, decode, and render source data of XR, the transmission network 420 may be configured to transmit XR data, and the XR terminal 430 provides diversified XR experience for a user by processing the XR data. It may be understood that another apparatus may be further included between the transmission network 420 and the XR terminal 430, for example, another terminal (for example, a mobile phone, a notebook computer, or a car) and/or a network device (for example, a relay, a Wi-Fi router, or a Wi-Fi access point) may be further included. The XR terminal 430 obtains the XR data from the transmission network 420 via the another terminal and/or the network device. Optionally, the system 400 further includes a centralized controller 440. The centralized controller 440 may receive/collect data from one or more of the cloud server 410, the transmission network 420, or the XR terminal 430, or may send data to one or more of the cloud server 410, the transmission network 420, or the XR terminal 430. It may be understood that the centralized controller 440 may be deployed independently of the cloud server 410, the transmission network 420, and the XR terminal 430, or may be deployed in the cloud server 410, the transmission network 420, or the XR terminal 430; the centralized controller 440 may not be deployed, but a function of the centralized controller 440 is implemented by the cloud server 410, the transmission network 420, or the XR terminal 430.

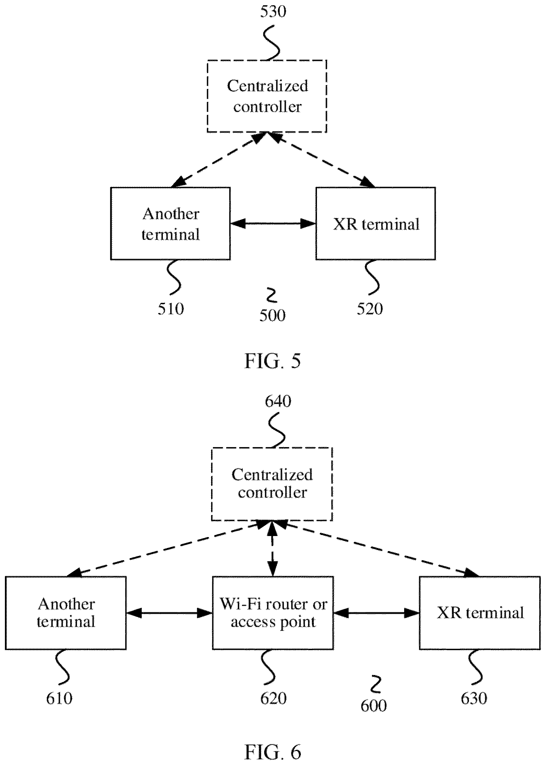

FIG. 5 is a diagram of another system network element to which an embodiment of this application is applicable. FIG. 5 shows a system 500, including an XR terminal 520 and another terminal 510. The another terminal 510 is a terminal other than the XR terminal 520. The another terminal 510 may be an XR terminal, or may be a common terminal (which may also be referred to as a non-XR terminal). The another terminal 510 may transmit XR data to the XR terminal 520. Optionally, the system 500 further includes a centralized controller 530. The centralized controller 530 may receive/collect data from the XR terminal 520 and/or the another terminal 510, or may send data to the XR terminal 520 and/or the another terminal 510. It may be understood that the centralized controller 530 may be deployed independently of the XR terminal 520 and the another terminal 510, or may be deployed in the XR terminal 520 or the another terminal 510; or the centralized controller 530 may not be deployed, but the XR terminal 520 or the another terminal 510 implements a function of the centralized controller 530.

FIG. 6 is a diagram of another system network element to which an embodiment of this application is applicable.

FIG. 6 shows a system 600, including an XR terminal 630, a Wi-Fi router or a Wi-Fi access point 620 (which may be referred to as a Wi-Fi apparatus 620 for short), and another terminal 610. The another terminal 610 is a terminal other than the XR terminal 630. The another terminal 610 may be an XR terminal, or may be a common terminal (which may also be referred to as a non-XR terminal). The another terminal 610 may transmit XR data to the XR terminal 630 via the Wi-Fi apparatus 620. Optionally, the system 600 further includes a centralized controller 640. The centralized controller 640 may receive/collect data from one or more of the another terminal 610, the Wi-Fi apparatus 620, or the XR terminal 630, or may send data to one or more of the another terminal 610, the Wi-Fi apparatus 620, or the XR terminal 630. It may be understood that the centralized controller 640 may be deployed independently of the another terminal 610, the Wi-Fi apparatus 620, and the XR terminal 630, or may be deployed in the another terminal 610, the Wi-Fi apparatus 620, or the XR terminal 630; or the centralized controller 640 may not be deployed, but the another terminal 610, the Wi-Fi apparatus 620, or the XR terminal 630 implements a function of the centralized controller 640.

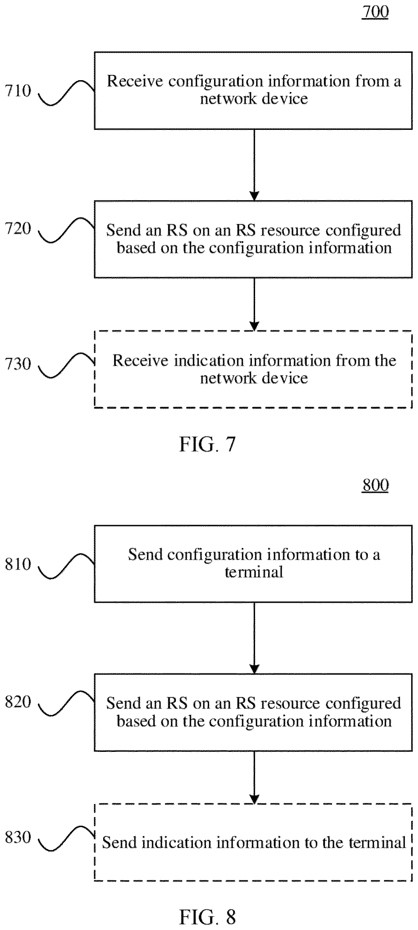

FIG. 7 is a schematic flowchart of a communication method 700 according to an embodiment of this application. The method may be executed by a terminal (for example, an XR terminal), or may be a chip, a chip system, a processor, or the like that supports the terminal in implementing the method. Execution bodies of parts in FIG. 7 may be identical or different. As shown in FIG. 7, the method 700 in this embodiment may include a part 710 and a part 720.

Part 710: Receive configuration information from a network device.

In a possible implementation of the part 710, the receiving configuration information from a network device may be receiving RRC signaling from the network device, where the configuration information is carried in a field newly added to the RRC signaling. For example, a field may be newly added to RRC signaling SRS-Config to configure SRS resource group information. The SRS resource group information is used to configure resources on which the terminal sends SRSs, and one SRS resource corresponds to sending of one SRS.

Part 720: Send an RS on an RS resource configured based on the configuration information, where the RS resource is included in a plurality of RS resource groups, an RS resource group i in the plurality of RS resource groups includes K first RS resources configured based on the configuration information, transmission moments of the K first RS resources are successively $T_{i,1}$, $T_{i,1}$, $\cdots$, $T_{i,K}$, an RS resource group (i+1) in the plurality of RS resource groups includes K second RS resources configured based on the configuration information, and transmission moments of the K second RS resources are successively $T_{i+1,1}$, $T_{i+1,2}$, $\cdots$, $T_{i+1,K}$, and satisfy: $T_{i,m+1} - T_{i,m} = P_m$, $T_{i+1,m+1} - T_{i+1,m} = P_m$ and $T_{i+1,k} - T_{i,k} = Q_i$, where K is an integer greater than 1, i is an identifier of the RS resource group i, i+1 is an identifier of the RS resource group (i+1), i may be an integer greater than or equal to 0, or may be an integer greater than or equal to 1, m is an integer and satisfies $1 \le m < K$, k is an integer and satisfies $1 \le k \le K$, $P_m > 0$, and $Q_i > 0$.

In the part 720, in an implementation of sending the RS on the RS resource configured based on the configuration information, the RS resource is an SRS resource, and the configuration information includes SRS resource group information and is used for configuring the SRS resource. For a case in which quantities of transmit and receive antennas are equal, it may be considered that a field SRS ResourceSet clustering is newly added to SRS-Config of the configuration information, to indicate SRS resource sets that belong to a same group. For a case in which quantities of transmit and receive antennas are unequal, it is considered that a field SRS Resource clustering is newly added, to indicate SRS resources that belong to a same group. Different from an SRS ResourceIdList field that includes only an SRS ResourceId in an SRS resource set, the SRS Resource clustering in the configuration information includes all SRS ResourceIds in the group.

Optionally, the configuration information is further used to configure a quantity of first RS resources in the RS resource group as K. In an implementation, the network device configures the quantity K of first RS resources in the RS resource group based on a subcarrier spacing (subcarrier spacing, SCS), a frame structure, and a time jitter (jitter) range. For example, when the subcarrier spacing SCS=30 kHz and the frame structure is DDDSU, an SRS resource is configured in an S slot. Because duration of each slot is 0.5 ms, an occurrence periodicity of the S slot is 2.5 ms. When an arrival jitter range of a video frame is -4 ms≤jitter≤4 ms, $\lfloor 8/2.5 \rfloor = 3$ SRS resources (sets) can be configured within the range, where "$\lfloor \rfloor$" indicates rounding down to the nearest integer. In addition, because only SRS information sent before the video frame arrives is for valid channel measurement, one SRS resource (set) needs to be added before the jitter range as the 1st SRS resource in the SRS resource group. Therefore, the quantity K of the first RS resources is 4.

Optionally, the configuration information is further used to configure a transmission interval between adjacent RS resource groups in time domain (for example, a transmission interval $Q_i$ between the RS resource group i+1 and the RS resource group i). In an implementation, the network device configures the transmission interval between the adjacent RS resource groups in time domain based on the SCS and the frame structure. Transmission intervals between two different adjacent RS resource groups may be the same (for example, $Q_i = Q_{i+1}$), or may be different. A sum of transmission intervals between several consecutive (for example, w) adjacent RS resource groups is a fixed value (for example, $\sum_{n=i}^{i+w} Q_n$ is a fixed value), and the fixed value may be a sum of consecutive w video periodicities. For example, when a video frame per second is 60 Hz, the video periodicity is 1/FPS=16.67 ms. If the SCS=30 kHz, the network device may configure $Q_i$=17.5 ms, $Q_{i+1}$=15 ms, and $Q_{i+2}$=17.5 ms as transmission intervals between three consecutive adjacent RS resource groups in time domain. In addition, that $\sum_{n=i}^{i+2} Q_n$, which is, in other words, equal to a sum of three video periodicities, is equal to 50 ms is satisfied. It may be understood that, for a case in which the sum of transmission intervals between the several consecutive adjacent RS resource groups is a fixed value, the several consecutive adjacent RS resource groups may start from any RS resource group, for example, may start from the RS resource group i, or may start from the RS resource group (i+1), but the fixed value of the sum remains unchanged (for example, $\sum_{n=i}^{i+w} Q_n = \sum_{n=i+1}^{i+w+1} Q_n$). Optionally, the transmission interval $Q_i$ may be obtained by the network device in a table as shown in Table 1, or may be obtained according to a provided mathematical formula that is satisfied.

**Table 1**

| Frame structure | Video frame per second/FPS | Video periodicity | Subcarrier spacing/SCS | RS adaptation periodicity |
|---|---|---|---|---|
| DDDSU | 60 Hz | 16.67 ms | 15 kHz | {20, 15, 15} |
| | | | 30 kHz | {17.5, 15, 17.5} |
| | | | 60 kHz | {17.5, 16.25, 16.25} |
| | 120 Hz | 8.33 ms | 15 kHz | {10, 10, 5, 10, 10, 5} |
| | | | 30 kHz | {10, 7.5, 7.5, 10, 7.5, 7.5} |
| | | | 60 kHz | {8.75, 8.75, 7.5, 8.75, 8.75, 7.5} |
| | 90 Hz | 11.11 ms | 15 kHz | {15, 10, 10, 10, 10, 15, 10, 10, 10} |
| | | | 30 kHz | {12.5, 10, 12.5, 10, 10, 12.5, 10, 12.5, 10} |
| | | | 60 kHz | {11.25, 11.25, 11.25, 11.25, 10, 11.25, 11.25, 11.25, 11.25} |

In Table 1, the RS adaptation periodicity is a set, and elements in the set may be the same or may be different. A quantity of elements in the set represents a value of w in the foregoing example, and an arrangement order of the elements in the set does not represent a specific value order of $Q_i$. For example, reference is made to the foregoing example. When the frame structure is a DDDSU slot pattern, the video periodicity is 16.67 ms, and the SCS is 30 kHz, the network device may configure $Q_i$=17.5 ms, $Q_{i+1}$=15 ms, and $Q_{i+2}$=17.5 ms as transmission intervals between three consecutive adjacent RS resource groups in time domain according to Table 1, or may configure $Q_i$=15 ms, $Q_{i+1}$=17.5 ms, and $Q_{i+2}$=17.5 ms, or $Q_i$=17.5 ms, $Q_{i+1}$=17.5 ms, and $Q_{i+2}$=15 ms. It may be understood that values in Table 1 are merely examples, and include only some values of configuration parameters. However, embodiments of this application may be extended to different scenarios based on different configuration parameters. Values in Table 1 are not limited in this application.

Optionally, in an embodiment in which the configuration information is further used to configure the transmission interval between the adjacent RS resource groups in time domain, the transmission interval is obtained according to a mathematical condition that is satisfied, that is, $Q_i$=15 ms or 17.5 ms and $\sum_{n=i}^{i+2} Q_n = 50\ ms$ is satisfied, where i≤n≤i+2.

Optionally, in an embodiment in which the configuration information is further used to configure the transmission interval between the adjacent RS resource groups in time domain, the transmission interval is obtained according to a mathematical condition that is satisfied, that is, $Q_i$=10 ms or 7.5 ms and $\sum_{n=i}^{i+5} Q_n = 50\ ms$ is satisfied, where i≤n≤i+5.

Optionally, in an embodiment in which the configuration information is further used to configure the transmission interval between the adjacent RS resource groups in time domain, the transmission interval is obtained according to a mathematical condition that is satisfied, that is, $Q_i$=10 ms or 12.5 ms and $\sum_{n=i}^{i+8} Q_n = 100\ ms$ is satisfied, where i≤n≤i+8.

Optionally, in an embodiment in which the configuration information is further used to configure the transmission interval between the adjacent RS resource groups in time domain, the transmission interval is obtained according to a mathematical condition that is satisfied, that is, $Q_i$=15 ms or 20 ms and satisfies $\sum_{n=i}^{i+2} Q_n = 50\ ms$, where i≤n≤i+2.

Optionally, the configuration information is further used to configure a transmission interval $P_m$ between adjacent RS resources in an RS resource group in time domain, and a value of $P_m$ may be determined based on a specific slot pattern. For example, when the frame structure is the DDDSU slot pattern and the RS resource group is an SRS resource group, all RS resources in the RS resource group may be sent in an S slot or a U slot in the slot pattern. An RS resource group i is used as an example. If a resource m in the RS resource group i is sent in the S slot in the slot pattern DDDSU, and a next adjacent resource (m+1) is sent in an S slot in a next slot pattern DDDSU, an interval $P_m$ between the resource m and the resource (m+1) at a transmission moment is equal to five slots. If a resource m in the RS resource group i is sent in the S slot in the slot pattern DDDSU, and a next adjacent resource (m+1) is sent in a U slot in a next slot pattern DDDSU, an interval $P_m$ between the resource m and the resource (m+1) at a transmission moment is equal to six slots. Similarly, if a resource m in the RS resource group i is sent in the U slot in the slot pattern DDDSU, and a next adjacent resource (m+1) is sent in an S slot in a next slot pattern DDDSU, an interval $P_m$ between the resource m and the resource (m+1) at a transmission moment is equal to four slots. If a resource m in the RS resource group i is sent in the U slot in the slot pattern DDDSU, and a next adjacent resource (m+1) is sent in a U slot in a next slot pattern DDDSU, an interval $P_m$ between the resource m and the resource (m+1) at a transmission moment is equal to five slots. A specific value of $P_m$ is related to a slot pattern and a selected slot in which an RS resource is sent, and may be flexibly set. This is not limited in embodiments of this application.

The method 700 may further include an optional part 730.

Part 730: Receive indication information from the network device, where the indication information indicates to skip sending an RS on a remaining RS resource in a current RS resource group.

In an implementation of the part 730, the indication information is carried in MAC CE signaling. For example, the terminal sends SRSs on all SRS resources in the SRS resource group based on the configuration information. After the network device completes receiving of a current video frame, the network device sends the MAC CE signaling to the terminal, and skips sending an SRS on a remaining SRS resource in a current SRS resource group. Optionally, based on the configuration information, both the terminal and the network device already know sending moments of all SRS resources in the current SRS resource group. Therefore, the SRS resources in the current SRS resource group are only deactivated based on the MAC CE. It may be understood that a deactivation command does not take effect on an SRS resource group in a next video frame arrival periodicity.

FIG. 8 is a schematic flowchart of another communication method 800 according to an embodiment of this application. The method may be executed by a network device (for example, a core network device, an access network device, a Wi-Fi router, or a Wi-Fi access point), or may be a chip, a chip system, a processor, or the like that supports the network device in implementing the method. The method may be executed by a server (for example, a cloud server), or may be a chip, a chip system, a processor, or the like that supports the server in implementing the method. The method may be executed by a centralized controller, or may be a chip, a chip system, a processor, or the like that supports the centralized controller in implementing the method. Execution bodies of parts in FIG. 8 may be identical or different. As shown in FIG. 8, the method 800 in this embodiment may include a part 810 and a part 820.

Part 810: Send configuration information to a terminal.

In a possible implementation of the part 810, the sending configuration information to a terminal may be sending RRC signaling to the terminal, where the configuration information is carried in a field newly added to the RRC signaling. For example, a field may be newly added to RRC signaling SRS-Config to configure SRS resource group information. The SRS resource group information is used to configure resources on which the terminal sends SRSs, and one SRS resource corresponds to sending of one SRS.

Part 820: Receive an RS on an RS resource configured based on the configuration information, where the RS resource is included in a plurality of RS resource groups, an RS resource group i in the plurality of RS resource groups includes K first RS resources configured based on the configuration information, transmission moments of the K first RS resources are successively $T_{i,1}$, $T_{i,1}$, $\cdots$, $T_{i,K}$, an RS resource group (i+1) in the plurality of RS resource groups includes K second RS resources configured based on the configuration information, and transmission moments of the K second RS resources are successively $T_{i+1,1}$, $T_{i+1,2}$, $\cdots$, $T_{i+1,K}$, and satisfy: $T_{i,m+1} - T_{i,m} = P_m$, $T_{i+1,m+1} - T_{i+1,m} = P_m$, and $T_{i+1,k} - T_{i,k} = Q_i$, where K is an integer greater than 1, i is an identifier of the RS resource group i, i+1 is an identifier of the RS resource group (i+1), i may be an integer greater than or equal to 0, or may be an integer greater than or equal to 1, m is an integer and satisfies $1 \leq m < K$, k is an integer and satisfies $1 \leq k \leq K$, $P_m > 0$, and $Q_i > 0$.

In the part 820, in an implementation of receiving the RS on the RS resource configured based on the configuration information, the RS resource is an SRS resource, and the configuration information includes the SRS resource group information and is used for configuring the SRS resource. For a case in which quantities of transmit and receive antennas are equal, it may be considered that a field SRS ResourceSet clustering is newly added to SRS-Config of the configuration information, to indicate SRS resource sets that belong to a same group. For a case in which quantities of transmit and receive antennas are unequal, it is considered that a field SRS Resource clustering is newly added, to indicate SRS resources that belong to a same group. Different from an SRS ResourceIdList field that includes only an SRS ResourceId in an SRS resource set, the SRS Resource clustering in the configuration information includes all SRS ResourceIds in the group. Content included in the configuration information is the same as that in the part 720 in the method 700, and details are not described herein again.

The method 800 may further include an optional part 830.

Part 830: Send indication information to the terminal, where the indication information indicates the terminal to skip sending an RS on a remaining RS resource in a current RS resource group.

In an implementation of the part 830, the indication information is carried in MAC CE signaling. For example, the terminal sends SRSs on all SRS resources in the SRS resource group based on the configuration information. After the network device completes receiving of a current video frame, the network device sends the MAC CE signaling to the terminal, and skips sending an SRS on a remaining SRS resource in a current SRS resource group. Optionally, based on the configuration information, both the terminal and the network device already know sending moments of all SRS resources in the current SRS resource group. Therefore, the SRS resources in the current SRS resource group are only deactivated based on MAC CE. It may be understood that a deactivation command does not take effect on an SRS resource group in a next video frame arrival periodicity.

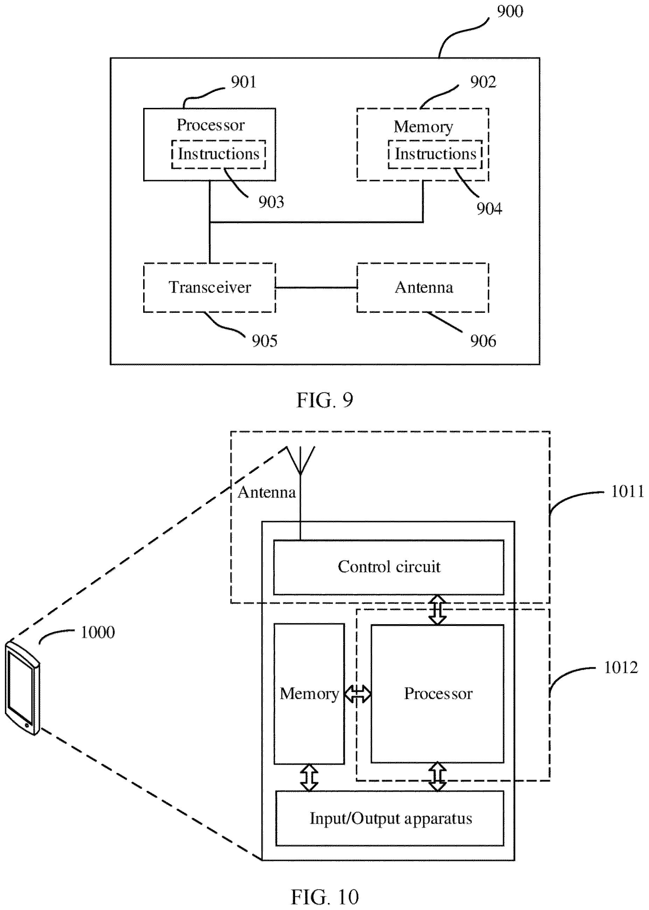

FIG. 9 is a diagram of a structure of an apparatus. The apparatus 900 may be a network device, a terminal device, a server, or a centralized controller, or may be a chip, a chip system, a processor, or the like that supports the network device, the terminal device, the server, or the centralized controller in implementing the foregoing method. The apparatus may be configured to implement a method described in the foregoing method embodiments. For details, refer to the descriptions in the foregoing method embodiments.

The apparatus 900 may include one or more processors 901, and the processor 901 may also be referred to as a processing unit, and can implement a specific control function. The processor 901 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 901 may also store instructions and/or data 903, and the instructions and/or data 903 may be run by the processor, so that the apparatus 900 performs the method described in the foregoing method embodiments.

In another optional design, the processor 901 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to perform transmission or transfer of a signal.

In still another possible design, the apparatus 900 may include a circuit, and the circuit may implement a sending, receiving, or communication function in the foregoing method embodiments.

Optionally, the apparatus 900 may include one or more memories 902 that may store instructions 904, and the instructions may be run on the processor, so that the apparatus 900 is enabled to perform the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 900 may further include a transceiver 905 and/or an antenna 906. The processor 901 may be referred to as a processing unit, and controls the apparatus 900. The transceiver 905 may be referred to as a transceiver unit, a transceiver machine, a transceiver circuit, a transceiver apparatus, a transceiver module, or the like, and is configured to implement the receiving and sending functions.

Optionally, the apparatus 900 in this embodiment of this application may be configured to perform the method described in FIG. 7 or FIG. 8 in embodiments of this application.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an n-type metal oxide semiconductor (n-type metal oxide semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a network device or a terminal device. However, a scope of the apparatus described in this application is not limited thereto, and a structure of the apparatus may not be limited by that in FIG. 9. The apparatus may be an independent device, or may be a part of a larger device. For example, the apparatus may be:

(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver machine, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) another device or the like.

FIG. 10 is a structural diagram of a terminal device. The terminal device is applicable to the scenario shown in FIG. 1, FIG. 4, FIG. 5, or FIG. 6. For ease of description, FIG. 10 shows only main components of the terminal device. As shown in FIG. 10, the terminal device 1000 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal device, the radio frequency circuit receives the radio frequency signal through the antenna. The radio frequency signal is further converted into a baseband signal, and the baseband signal is output to the processor. The processor converts the baseband signal into data, and processes the data.

For ease of description, FIG. 10 shows only one memory and one processor. In an actual terminal device, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 10 integrates functions of the baseband processor and the central processing unit. A person skilled in the art may understand that the baseband processor and the central processing unit may be alternatively processors independent of each other, and are connected to each other by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, an antenna and a control circuit that have receiving and sending functions may be considered as a transceiver unit 1011 of the terminal device 1000, and a processor that has a processing function may be considered as a processing unit 1012 of the terminal device 1000. As shown in FIG. 10, the terminal device 1000 includes the transceiver unit 1011 and the processing unit 1012. The transceiver unit may also be referred to as a transceiver, a transceiver machine, a transceiver apparatus, or the like. Optionally, a component that is in the transceiver unit 1011 and that is configured to implement a receiving function may be considered as a receiving unit, and a component that is in the transceiver unit 1011 and that is configured to implement a sending function may be considered as a sending unit. In other words, the transceiver unit 1011 includes the receiving unit and the sending unit. For example, the receiving unit may also be referred to as a receiver machine, a receiver, or a receiving circuit, and the sending unit may also be referred to as a transmitter machine, a transmitter, or a transmitting circuit. Optionally, the receiving unit and the sending unit may be one integrated unit, or may be a plurality of independent units. The receiving unit and the sending unit may be in one geographical position, or may be distributed in a plurality of geographical positions.

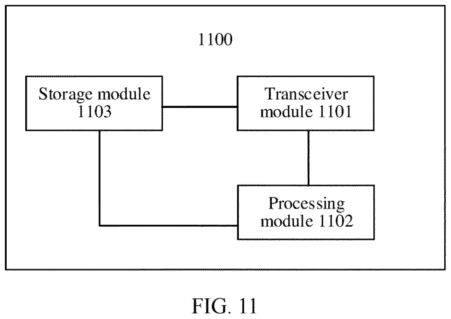

As shown in FIG. 11, another embodiment of this application provides an apparatus 1100. The apparatus may be a terminal, a network device, a server, or a centralized controller, or may be a component (for example, an integrated circuit or a chip) of a terminal, a network device, a server, or a centralized controller. Alternatively, the apparatus may be another communication module, configured to implement a method in the method embodiments of this application. The apparatus 1100 may include: a processing module 1102 (or referred to as a processing unit). Optionally, the apparatus may further include an interface module 1101 (or referred to as a transceiver unit or a transceiver module) and a storage module 1103 (or referred to as a storage unit). The interface module 1101 is configured to implement communication with another device. The interface module 1101 may be, for example, a transceiver module or an input/output module.

In a possible design, one or more modules in FIG. 11 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The apparatus has a function of implementing the terminal described in embodiments of this application. For example, the apparatus includes a corresponding module, unit, or means (means) used for the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment. Alternatively, the apparatus has a function of implementing the network device described in embodiments of this application. For example, the apparatus includes a corresponding module, unit, or means (means) used for the network device to perform the steps that are related to the network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment.

Optionally, the modules in the apparatus 1100 in this embodiment of this application may be configured to perform the method described in FIG. 7 in embodiments of this application.

In a possible design, an apparatus 1100 may include: a processing module 1102 and an interface module 1101. The interface module 1101 is configured to receive configuration information from the network device. The processing module 1102 is configured to send an RS on an RS resource configured based on the configuration information. The RS resource is included in a plurality of RS resource groups, where an RS resource group i in the plurality of RS resource groups includes K first RS resources configured based on the configuration information, transmission moments of the K first RS resources are successively $T_{i,1}$, $T_{i,2}$, ···, $T_{i,K}$, an RS resource group (i+1) in the plurality of RS resource groups includes K second RS resources configured based on the configuration information, and transmission moments of the K second RS resources are successively $T_{i+1,1}$, $T_{i+1,2}$, ···, $T_{i+1,K}$, and satisfy: $T_{i,m+1}- T_{i,m} = P_m$, $T_{i+1,m+1}-T_{i+1,m} = P_m$, and $T_{i+1,k}-T_{i,k} = Q_i$, where K is an integer greater than 1, i is an identifier of the RS resource group i, i+1 is an identifier of the RS resource group (i+1), m is an integer and satisfies $1 \le m < K$, k is an integer and satisfies $1 \le k \le K$, $P_m > 0$, and $Q_i > 0$.

In some possible implementations of the apparatus 1100, the interface module 1101 is further configured to receive indication information from the network device, where the indication information indicates to skip sending an RS on a remaining RS resource in a current RS resource group.

In some possible implementations of the apparatus 1100, $Q_i$=15 ms or 17.5 ms, and $\sum_{n=i}^{i+2} Q_n = 50\,ms$ is satisfied, where i≤n≤i+2.

In some possible implementations of the apparatus 1100, $Q_i$=10 ms or 7.5 ms, and $\sum_{n=i}^{i+5} Q_n = 50\,ms$ is satisfied, where i≤n≤i+5.

In some possible implementations of the apparatus 1100, $Q_i$=10 ms or 12.5 ms, and $\sum_{n=i}^{i+8} Q_n = 100\,ms$ is satisfied, where i≤n≤i+8.

In some possible implementations of the apparatus 1100, $Q_i$=15 ms or 20 ms, and $\sum_{n=i}^{i+2} Q_n = 50\,ms$ is satisfied, where i≤n≤i+2.

Optionally, the modules in the apparatus 1100 in this embodiment of this application may be configured to perform the method described in FIG. 8 in embodiments of this application.

In a possible design, an apparatus 1100 may include: a processing module 1102 and an interface module 1101. The interface module 1101 is configured to send the configuration information to the terminal. The processing module 1102 is configured to receive an RS on an RS resource configured based on the configuration information, the RS resource is included in a plurality of RS resource groups, where an RS resource group i in the plurality of RS resource groups includes K first RS resources configured based on the configuration information, transmission moments of the K first RS resources are successively $T_{i,1}$, $T_{i,2}$, $\cdots$, $T_{i,K}$, an RS resource group (i+1) in the plurality of RS resource groups includes K second RS resources configured based on the configuration information, and transmission moments of the K second RS resources are successively $T_{i+1,1}$, $T_{i+1,2}$, $\cdots$, $T_{i+1,K}$, and satisfy: $T_{i,m}+1-T_{i,m} = P_m$, $T_{i+1,m+1}-T_{i+1,m} = P_m$, and $T_{i+1,k}-T_{i,k} = Q_i$, where K is an integer greater than 1, i is an identifier of the RS resource group i, i+1 is an identifier of the RS resource group (i+1), m is an integer and satisfies $1 \leq m < K$, k is an integer and satisfies $1 \leq k \leq K$, $P_m > 0$, and $Q_i > 0$.

In some possible implementations of the apparatus 1100, the interface module 1101 is further configured to send indication information to the terminal, where the indication information indicates the terminal to skip sending an RS on the remaining RS resource in the current RS resource group.

In some possible implementations of the apparatus 1100, $Q_i$=15 ms or 17.5 ms, and $\sum_{n=i}^{i+2} Q_n = 50\,ms$ is satisfied, where i≤n≤i+2.

In some possible implementations of the apparatus 1100, $Q_i$=10 ms or 7.5 ms, and $\sum_{n=i}^{i+5} Q_n = 50\,ms$ is satisfied, where i≤n≤i+5.

In some possible implementations of the apparatus 1100, $Q_i$=10 ms or 12.5 ms, and $\sum_{n=i}^{i+8} Q_n = 100\,ms$ is satisfied, where i≤n≤i+8.

In some possible implementations of the apparatus 1100, $Q_i$=15 ms or 20 ms, and $\sum_{n=i}^{i+2} Q_n = 50\,ms$ is satisfied, where i≤n≤i+2.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein again.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by using hardware or software depends on particular applications and a design requirement of the entire system. A person skilled in the art may use various methods to implement the functions for corresponding applications, but it should not be considered that the implementation goes beyond the scope of embodiments of this application.

It may be understood that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component.

The solutions described in this application may be implemented in various manners. For example, the technologies may be implemented by hardware, software, or a combination thereof. For hardware implementation, a processing unit configured to perform these technologies at a communication apparatus (for example, a base station, a terminal, a network entity, or a chip) may be implemented in one or more general-purpose processors, a DSP, a digital signal processor, an ASIC, a programmable logic device, an FPGA or another programmable logic apparatus, a discrete gate or transistor logic, a discrete hardware component, or any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It may be understood that, in this application, "when", "if", and "in case of" all mean that an apparatus performs corresponding processing in an objective case, are not intended to limit time, does not require the apparatus to necessarily have a determining action during implementation, and do not mean that there is another limitation.

"Simultaneously" in this application may be understood as being at a same time point, may be understood as being within a time period, or may be understood as being within a same periodicity.

A person skilled in the art may understand that various numbers such as first and second in this application are merely used for differentiation for ease of description, and are not used to limit the scope of embodiments of this application. A specific value of a number (which may also be referred to as an index), a specific value of a quantity, and a position in this application are merely used as examples, but are not unique representation forms, and are not used to limit the scope of embodiments of this application. Various numbers such as first and second in this application are merely used for differentiation for ease of description, and are not used to limit the scope of embodiments of this application.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural. The character "/" generally indicates an "or" relationship between the associated objects.

The term "at least one of" in this specification indicates all combinations or any combination of listed items. For example, "at least one of A, B, and C" may indicate the following six cases: only A exists, only B exists, only C exists, A and B coexist, B and C coexist, and A, B, and C coexist. A may be singular or plural, B may be singular or plural, and C may be singular or plural.

It should be understood that in embodiments of this application, "B corresponding to A" represents that B is associated with A, and B may be determined based on A. However, it should be further understood that determining B based on A does not mean that B is determined based only on A. B may alternatively be determined based on A and/or other information.

The correspondences shown in the tables in this application may be configured, or may be predefined. Values of the information in the tables are merely examples, and other values may be configured. This is not limited in this application. When a correspondence between the information and the parameters is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "predefine", "store", "pre-store", "pre-negotiate", "pre-configure", "solidify", or "pre-burn".

A person of ordinary skill in the art may understand that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or a part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

For same or similar parts in embodiments of this application, refer to each other. In embodiments of this application and the implementations/methods/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A reference signal RS sending method, wherein the method comprises:

   receiving configuration information from a network device; and
   sending an RS on an RS resource configured based on the configuration information, wherein
   the RS resource is comprised in a plurality of RS resource groups, wherein an RS resource group i in the plurality of RS resource groups comprises K first RS resources configured based on the configuration information, transmission moments of the K first RS resources are successively $T_{i,1}, T_{i,2}, \cdots, T_{i,K}$, an RS resource group (i+1) in the plurality of RS resource groups comprises K second RS resources configured based on the configuration information, and transmission moments of the K second RS resources are successively $T_{i+1,1}, T_{i+1,2}, \cdots, T_{i+1,K}$, and satisfy: $T_{i,m+1} - T_{i,m} = P_m$, $T_{i+1,m+1} - T_{i+1,m} = P_m$, and $T_{i+1,k} - T_{i,k} = Q_i$, wherein K is an integer greater than 1, i is an identifier of the RS resource group i, i+1 is an identifier of the RS resource group (i+1), m is an integer and satisfies $1 \leq m < K$, k is an integer and satisfies: $1 \leq k \leq K$, $P_m > 0$, and $Q_i > 0$.

2. The method according to claim 1, wherein the method further comprises:
   receiving indication information from the network device, wherein the indication information indicates to skip sending an RS on a remaining RS resource in a current RS resource group.

3. The method according to claim 1 or 2, wherein $Q_i$=15 ms or 17.5 ms and $\sum_{n=i}^{i+2} Q_n = 50\ ms$ is satisfied, wherein i≤n≤i+2.

4. The method according to claim 1 or 2, wherein $Q_i$=10 ms or 7.5 ms and $\sum_{n=i}^{i+5} Q_n = 50\ ms$ is satisfied, wherein i≤n≤i+5.

5. The method according to claim 1 or 2, wherein $Q_i$=10 ms or 12.5 ms and $\sum_{n=i}^{i+8} Q_n = 100\ ms$ is satisfied, wherein i≤n≤i+8.

6. The method according to claim 1 or 2, wherein $Q_i$=15 ms or 20 ms and $\sum_{n=i}^{i+2} Q_n = 50\ ms$ is satisfied, wherein i≤n≤i+2.

7. A reference signal RS receiving method, wherein the method comprises:

   sending configuration information to a terminal; and
   receiving an RS on an RS resource configured based on the configuration information, wherein
   the RS resource is comprised in a plurality of RS resource groups, wherein an RS resource group i in the plurality of RS resource groups comprises K first RS resources configured based on the configuration information, transmission moments of the K first RS resources are successively $T_{i,1}, T_{i,1}, \cdots, T_{i,K}$, an RS resource group (i+1) in the plurality of RS resource groups comprises K second RS resources configured based on the configuration information, and transmission moments of the K second RS resources are successively $T_{i+1,1}, T_{i+1,2}, \cdots, T_{i+1,K}$, and satisfy: $T_{i,m+1} - T_{i,m} = P_m$, $T_{i+1,m+1} - T_{i+1,m} = P_m$, and $T_{i+1,k} - T_{i,k} = Q_i$, wherein K is an integer greater than 1, i is an identifier of the RS resource group i, i+1 is an identifier of the RS resource group (i+1), m is an integer and satisfies $1 \leq m < K$, k is an integer and satisfies $1 \leq k \leq K$, $P_m > 0$, and $Q_i > 0$.

8. The method according to claim 7, wherein the method further comprises:
   sending indication information to the terminal, wherein the indication information indicates the terminal to skip sending an RS on a remaining RS resource in a current RS resource group.

**9.**

The method according to claim 7 or 8, wherein $Q_i$=15 ms or 17.5 ms and $\sum_{n=i}^{i+2} Q_n = 50\ ms$ is satisfied, wherein i≤n≤i+2.

**10.** The method according to claim 7 or 8, wherein $Q_i$=10 ms or 7.5 ms and $\sum_{n=i}^{i+5} Q_n = 50\ ms$ is satisfied, wherein i≤n≤i+5.

**11.** The method according to claim 7 or 8, wherein $Q_i$=10 ms or 12.5 ms and $\sum_{n=i}^{i+8} Q_n = 100\ ms$ is satisfied, wherein i≤n≤i+8.

**12.** The method according to claim 7 or 8, wherein $Q_i$=15 ms or 20 ms and $\sum_{n=i}^{i+2} Q_n = 50\ ms$ is satisfied, wherein i≤n≤i+2.

**13.** A communication apparatus, comprising an interface module and a processing module, wherein

the interface module is configured to receive configuration information from a network device; and
the processing module is configured to control the apparatus to send an RS on a reference signal RS resource configured based on the configuration information, wherein
the RS resource is comprised in a plurality of RS resource groups, wherein an RS resource group i in the plurality of RS resource groups comprises K first RS resources configured based on the configuration information, transmission moments of the K first RS resources are successively $T_{i,1}$, $T_{i,1}$, ⋯, $T_{i,K}$, an RS resource group (i+1) in the plurality of RS resource groups comprises K second RS resources configured based on the configuration information, and transmission moments of the K second RS resources are successively $T_{i+1,1}$, $T_{i+1,2}$, ⋯, $T_{i+1,K}$, and satisfy: $T_{i,m+1}-T_{i,m} = P_m$, $T_{i+1,m+1}-T_{i+1,m} = P_m$, and $T_{i+1,k}-T_{i,k} = Q_i$, wherein K is an integer greater than 1, i is an identifier of the RS resource group i, i+1 is an identifier of the RS resource group (i+1), m is an integer and satisfies $1 \le m < K$, $k$ is an integer and satisfies $1 \le k \le K$, $P_m > 0$, and $Q_i > 0$.

**14.** The apparatus according to claim 13, wherein
the interface module is further configured to receive indication information from the network device, wherein the indication information indicates to skip sending an RS on a remaining RS resource in a current RS resource group.

**15.** The apparatus according to claim 13 or 14, wherein $Q_i$=15 ms or 17.5 ms and $\sum_{n=i}^{i+2} Q_n = 50\ ms$ is satisfied, wherein i≤n≤i+2.

**16.** The apparatus according to claim 13 or 14, wherein $Q_i$=10 ms or 7.5 ms and $\sum_{n=i}^{i+5} Q_n = 50\ ms$ is satisfied, wherein i≤n≤i+5.

**17.** The apparatus according to claim 13 or 14, wherein $Q_i$=10 ms or 12.5 ms and $\sum_{n=i}^{i+8} Q_n = 100\ ms$ is satisfied, wherein i≤n≤i+8.

**18.** The apparatus according to claim 13 or 14, wherein $Q_i$=15 ms or 20 ms and $\sum_{n=i}^{i+2} Q_n = 50\ ms$ is satisfied, wherein i≤n≤i+2.

**19.** A communication apparatus, comprising an interface module and a processing module, wherein

the interface module is configured to send configuration information to a terminal; and
the processing module is configured to control the apparatus to receive an RS on a reference signal RS resource configured based on the configuration information, wherein
the RS resource is comprised in a plurality of RS resource groups, wherein an RS resource group i in the plurality of RS resource groups comprises K first RS resources configured based on the configuration information, transmission moments of the K first RS resources are successively $T_{i,1}$, $T_{i,1}$, ⋯, $T_{i,K}$, an RS resource group (i+1) in the plurality of RS resource groups comprises K second RS resources configured based on the configuration information, and transmission moments of the K second RS resources are successively $T_{i+1,1}$, $T_{i+1,2}$, ⋯, $T_{i+1,K}$, and satisfy: $T_{i,m+1}-T_{i,m} = P_m$, $T_{i+1,m+1}-T_{i+1,m} = P_m$, and $T_{i+1,k}-T_{i,k} = Q_i$, wherein K is an integer greater than 1, i is an identifier of the RS resource group i, i+1 is an identifier of the RS resource group (i+1), m is an integer

and satisfies $1 \leq m < K$, $k$ is an integer and satisfies $1 \leq k \leq K$, $P_m > 0$, and $Q_i > 0$.

20. The apparatus according to claim 19, wherein
the interface module is further configured to send indication information to the terminal, wherein the indication information indicates the terminal to skip sending an RS on a remaining RS resource in a current RS resource group.

21. The apparatus according to claim 19 or 20, wherein $Q_i$=15 ms or 17.5 ms and $\sum_{n=i}^{i+2} Q_n =$ 50 $ms$ is satisfied, wherein i≤n≤i+2.

22. The apparatus according to claim 19 or 20, wherein $Q_i$=10 ms or 7.5 ms and $\sum_{n=i}^{i+5} Q_n =$ 50 $ms$ is satisfied, wherein i≤n≤i+5.

23. The apparatus according to claim 19 or 20, wherein $Q_i$=10 ms or 12.5 ms and $\sum_{n=i}^{i+8} Q_n =$ 100 $ms$ is satisfied, wherein i≤n≤i+8.

24. The apparatus according to claim 19 or 20, wherein $Q_i$=15 ms or 20 ms and $\sum_{n=i}^{i+2} Q_n =$ 50 $ms$ is satisfied, wherein i≤n≤i+2.

25. A communication apparatus, comprising: a processor, wherein the processor is coupled to a memory, and the memory is configured to store a program or instructions; and when the program or the instructions are executed by the processor, the apparatus is enabled to perform the method according to any one of claims 1 to 6 or claims 7 to 12.

26. A computer-readable storage medium, wherein the computer-readable storage medium stores a computer program or instructions; and when the computer program or the instructions are executed, a computer is enabled to perform the method according to any one of claims 1 to 6 or claims 7 to 12.

118

128

110

120

114

124

100

FIG. 1

Core network

RAN

gNB    CU

DU    DU

gNB    CU

DU    DU

FIG. 2

**Data packet**

16.67 ms
Complete video frame

FIG. 3

440

Centralized controller

Cloud server

Core network and access network

XR terminal

410

420

400

430

FIG. 4

530

Centralized
controller

Another
terminal

XR terminal

510

500

520

FIG. 5

640

Centralized
controller

Another
terminal

Wi-Fi router or
access point

XR terminal

610

620

600

630

FIG. 6

700

710 Receive configuration information from a network device

720 Send an RS on an RS resource configured based on the configuration information

730 Receive indication information from the network device

FIG. 7

800

810 Send configuration information to a terminal

820 Send an RS on an RS resource configured based on the configuration information

830 Send indication information to the terminal

FIG. 8

FIG. 9

FIG. 10

1100

Storage module
1103

Transceiver
module 1101

Processing
module 1102

FIG. 11

## INTERNATIONAL SEARCH REPORT

International application No.

**PCT/CN2022/141708**

| A. | CLASSIFICATION OF SUBJECT MATTER |
|---|---|

H04L5/00(2006.01)i

According to International Patent Classification (IPC) or to both national classification and IPC

| B. | FIELDS SEARCHED |
|---|---|

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 参考信号, 间隔, 时序, 配置, 资源组, interval, sequence, resource, RS, set, SRS, cluster +, configur+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2019213919 A1 (GUANGDONG OPPO MOBILE COMMUNICATIONS CO., LTD.) 14 November 2019 (2019-11-14)<br>description, page 8 line 52-page 21 line 49, and figures 2-7 | 1-26 |
| A | CN 113692722 A (GUANGDONG OPPO MOBILE COMMUNICATIONS CO., LTD.) 23 November 2021 (2021-11-23)<br>entire document | 1-26 |
| A | CN 107852294 A (NAN ZHENGJI) 27 March 2018 (2018-03-27)<br>entire document | 1-26 |
| A | CN 109802801 A (HUAWEI TECHNOLOGIES CO., LTD.) 24 May 2019 (2019-05-24)<br>entire document | 1-26 |
| A | ZTE. "Maintenance for Reference signals and QCL"<br>*3GPP TSG RAN WG1 Meeting #94bis, R1-1810215,* 12 October 2018 (2018-10-12),<br>entire document | 1-26 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 March 2023** | **17 March 2023** |

| Name and mailing address of the ISA/CN | Authorized officer |
|---|---|
| China National Intellectual Property Administration (ISA/CN)<br>China No. 6, Xitucheng Road, Jimenqiao, Haidian District, Beijing 100088 | |
| Facsimile No. **(86-10)62019451** | Telephone No. |

Form PCT/ISA/210 (second sheet) (July 2022)

<table>
<tr><td colspan="2" style="text-align:center">INTERNATIONAL SEARCH REPORT<br>Information on patent family members</td><td colspan="2">International application No.<br>**PCT/CN2022/141708**</td></tr>
</table>

| Patent document cited in search report | | | Publication date (day/month/year) | Patent family member(s) | | | Publication date (day/month/year) |
|---|---|---|---|---|---|---|---|
| WO | 2019213919 | A1 | 14 November 2019 | US | 2020106551 | A1 | 02 April 2020 |
| | | | | EP | 3621238 | A1 | 11 March 2020 |
| | | | | CA | 3065393 | A1 | 14 November 2019 |
| | | | | AU | 2018422466 | A1 | 19 December 2019 |
| | | | | JP | 2021527966 | A | 14 October 2021 |
| | | | | KR | 20210008295 | A | 21 January 2021 |
| | | | | IL | 270850 | A | 30 January 2020 |
| | | | | MX | 2019015366 | A | 20 February 2020 |
| | | | | CN | 110710149 | A | 17 January 2020 |
| | | | | TW | 201947975 | A | 16 December 2019 |
| | | | | CN | 111106920 | A | 05 May 2020 |
| CN | 113692722 | A | 23 November 2021 | WO | 2021016827 | A1 | 04 February 2021 |
| | | | | US | 2022085949 | A1 | 17 March 2022 |
| | | | | KR | 20220035336 | A | 22 March 2022 |
| | | | | EP | 3975459 | A1 | 30 March 2022 |
| | | | | IN | 202127061569 | A | 15 April 2022 |
| | | | | CN | 114389649 | A | 22 April 2022 |
| | | | | JP | 2022546173 | W | 04 November 2022 |
| CN | 107852294 | A | 27 March 2018 | KR | 20160121392 | A | 19 October 2016 |
| | | | | US | 2016301511 | A1 | 13 October 2016 |
| | | | | WO | 2016163797 | A1 | 13 October 2016 |
| | | | | KR | 20190025875 | A | 12 March 2019 |
| | | | | CN | 109639402 | A | 16 April 2019 |
| | | | | CN | 111478761 | A | 31 July 2020 |
| | | | | KR | 20200096896 | A | 14 August 2020 |
| | | | | KR | 20200130222 | A | 18 November 2020 |
| | | | | CN | 112311435 | A | 02 February 2021 |
| | | | | CN | 11238333 | A | 19 February 2021 |
| | | | | CN | 112491524 | A | 12 March 2021 |
| CN | 109802801 | A | 24 May 2019 | JP | 2021503819 | A | 12 February 2021 |
| | | | | WO | 2019096248 | A1 | 23 May 2019 |
| | | | | EP | 3672102 | A1 | 24 June 2020 |
| | | | | US | 2020374074 | A1 | 26 November 2020 |
| | | | | EP | 4054088 | A1 | 07 September 2022 |
| | | | | US | 2022140973 | A1 | 05 May 2022 |
| | | | | US | 2020052853 | A1 | 13 February 2020 |
| | | | | NZ | 763969 | A | 25 March 2022 |
| | | | | BR | 112020008403 | A2 | 03 November 2020 |
| | | | | CN | 111295847 | A | 16 June 2020 |
| | | | | CN | 114785467 | A | 22 July 2022 |

Form PCT/ISA/210 (patent family annex) (July 2022)